# EUROPEAN PATENT SPECIFICATION

(11) **EP 3 628 843 B1**
(45) Date of publication and mention of the grant of the patent: **10.05.2023**
(21) Application number: 19199281.7
(22) Date of filing: 24.09.2019
(51) Int. Cl.: F02C 7/12, F02C 7/32

(54) **FLUID PASSAGE ASSEMBLY FOR POWER GENERATOR**
FLUIDDURCHGANGSANORDNUNG FÜR EINEN STROMGENERATOR
ENSEMBLE DE PASSAGE DE FLUIDE POUR GÉNÉRATEUR DE PUISSANCE

(30) Priority: 25.09.2018 US 201816141384
(43) Date of publication of application: 01.04.2020
(73) Proprietor: GE Aviation Systems LLC, Grand Rapids, MI 49512 (US)
(72) Inventor: SEBASTIAN, Merin, Grand Rapids, MI Michigan 49512 (US); YAO, Qizhou, Matthew, Grand Rapids, MI Michigan 49512 (US); RALLABANDI, Indira, Priyadarsini, Grand Rapids, MI Michigan 49512 (US); MAHADEVAIAH, Narendra, Dev, Grand Rapids, MI Michigan 49512 (US); MAHLE, James, Patrick, Grand Rapids, MI Michigan 49512 (US); HUANG, Hao, Grand Rapids, MI Michigan 49512 (US)
(74) Representative: Openshaw & Co.

(56) References cited:
- EP-A2- 1 519 468
- WO-A1-2006/045772
- CN-U- 201 910 692
- CN-U- 207 459 917
- CN-U- 207 475 320
- GB-A- 1 434 711
- US-A- 2 508 397

## Description

### TECHNICAL FIELD

The disclosure relates to a power generator.

### BACKGROUND OF THE INVENTION

An aircraft engine, for example a gas turbine engine, includes a plurality of internal fluid channels for distributing fluids for different aspects of engine operation including lubrication distribution and coolant distribution. The internal components of the gas turbine engine can include power generators that require complicated routing in order to transfer fluid for lubrication and to transfer heat in order to maintain a functional temperature for the power generator. In some applications oil is utilized to transfer the heat.

CN 207 475 320 U discloses a motor heat sink that prevents dust and provides cooling of the motor. GB 1 434 711 A relates to a linear electric motor type acceleration apparatus and in particular to the cooling thereof for removing electrically generated heat. CN 201 910 692 U relates to a power generator with a ventilation pipe, in particular to an automobile power generator which is arranged in a motion state and has small space. CN 207 459 917 U discloses a permanent-magnet machine water-cooling machine shell. US 2 508 397 A discloses cooling means for gas turbogenerators. EP 1 519 468 A2 discloses a fluid cooled electric machine and a method of manufacturing such a machine. WO 2006/045772 A1 discloses an electrical machine.

### BRIEF DESCRIPTION OF THE INVENTION

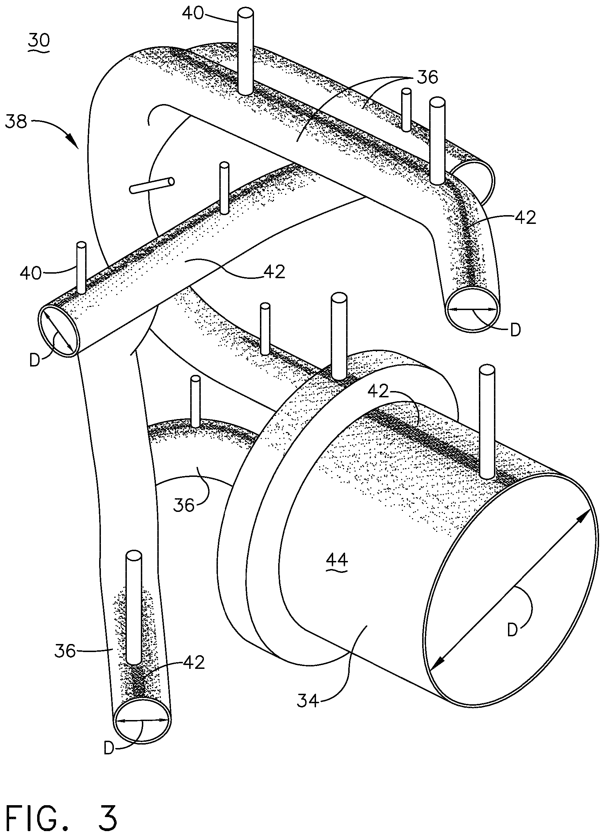

The invention is defined by the appended claims. In the following, apparatus and/or methods referred to as embodiments that nevertheless do not fall within the scope of the claims should be understood as examples useful for understanding the invention. In particular, the embodiment of FIG. 3 is not part of the claimed invention.

In one aspect, the present disclosure relates to a power generator comprising: a generator housing for an aircraft; and a fluid passage assembly for the power generator, the fluid passage assembly comprising an inlet conduit for receiving a fluid; a plenum fluidly coupled to the inlet conduit, and at least one distribution conduit fluidly coupled to and extending from the plenum for dispensing the fluid to the power generator, wherein a cross-section of the at least one distribution conduit has at least one corner. The cross-section further comprises an interior cross-section with radiused corners. The fluid passage assembly is a coolant fluid passage assembly integral with the generator housing.

### BRIEF DESCRIPTION OF THE DRAWINGS

In the drawings:
FIG. 1 is a schematic isometric view of a turbine engine with an accessory gear box, starter/generator, a mechanical power take-off.
FIG. 2 is an enlarged exploded perspective view of the starter/generator and an AGB for the turbine engine of FIG. 1.
FIG. 3 is a perspective view of a fluid passage assembly suitable for use in either or both of the starter/generator or mechanical power take-off of FIG. 1.
FIG. 4 is a perspective view of another fluid passage assembly according to an aspect of the disclosure herein suitable for use in either or both of the starter/generator or mechanical power take-off of FIG. 1.
FIG. 5 is an enlarged perspective view of a fluid passage for the fluid passage assembly of FIG. 4.
FIG. 6 is an enlarged perspective view of a variation of the fluid passage for the fluid passage assembly of FIG. 4.

### DETAILED DESCRIPTION OF THE EMBODIMENTS

The present disclosure is related to a fluid passage assembly for a power generator having fluid passages for lubrication and coolant distribution. One non-limiting example the power generator is an electric power generator mounted to an accessory gear box. While the examples described herein are directed to application of a turbine engine and an electric power generator, the disclosure can be applied to any implementation of a fluid passage assembly for lubrication or cooling distribution.

All directional references (e.g., radial, upper, lower, upward, downward, left, right, lateral, front, back, top, bottom, above, below, vertical, horizontal, clockwise, counterclockwise) are only used for identification purposes to aid the reader's understanding of the disclosure, and do not create limitations, particularly as to the position, orientation, or use thereof. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other. The exemplary drawings are for purposes of illustration only and the dimensions, positions, order, and relative sizes reflected in the drawings attached hereto can vary.

As used herein, the term "forward" or "upstream" refers to moving in a direction toward the engine inlet, or a component being relatively closer to the engine inlet as compared to another component. The term "aft" or "downstream" refers to a direction toward the rear or outlet of the engine relative to the engine centerline. Additionally, as used herein, the terms "radial" or "radially" refer to a dimension extending between a center longitudinal axis of the engine and an outer engine circumference. It should be further understood that "a set" can include any number of the respectively described elements, including only one element.

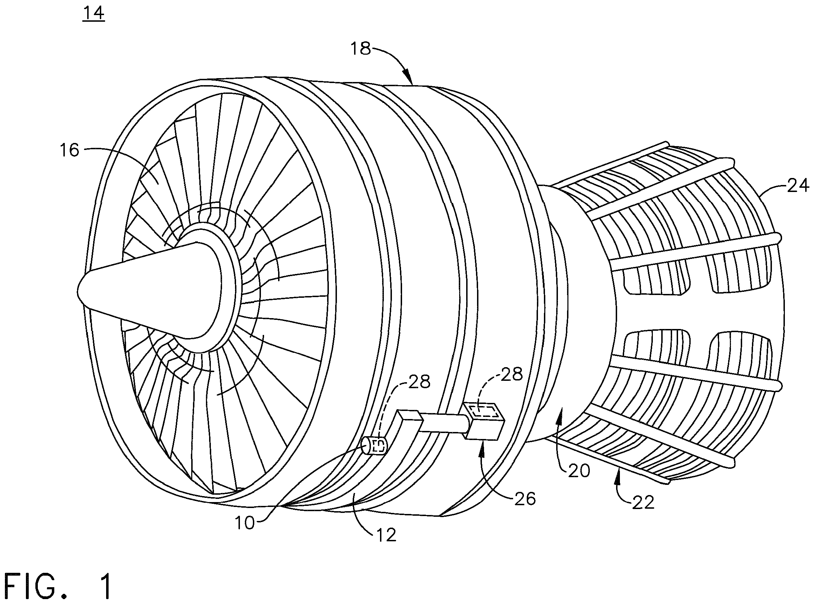

Referring to FIG. 1, a starter/generator 10 is coupled to an accessory gear box (AGB) 12, also known as a transmission housing, and together are schematically illustrated as being mounted to a turbine engine 14 such as a gas turbine engine. This assembly is commonly referred to as an Integrated Starter/Generator Gearbox (ISGB). While illustrated as a starter/generator 10, it should be understood that the starter/generator can be a starter, or a power generator, or a generator of any type such as a mechanical power take-off unit. The turbine engine 14 comprises an air intake with a fan 16 that supplies air to a high pressure compression region 18. The air intake with a fan 16 and the high pressure compression region collectively are known as the 'cold section' of the turbine engine 14 upstream of the combustion. The high pressure compression region 18 provides a combustion chamber 20 with high pressure air. In the combustion chamber, the high pressure air is mixed with fuel and combusted. The hot and pressurized combusted gas passes through a high pressure turbine region 22 and a low pressure turbine region 24 before exhausting from the turbine engine 14. As the pressurized gases pass through the high pressure turbine (not shown) of the high pressure turbine region 22 and the low pressure turbine (not shown) of the low pressure turbine region 24, the turbines extract rotational energy from the flow of the gases passing through the turbine engine 14. The high pressure turbine of the high pressure turbine region 22 can be coupled to the compression mechanism (not shown) of the high pressure compression region 18 by way of a shaft to power the compression mechanism. The low pressure turbine can be coupled to the fan 16 of the air intake by way of a shaft to power the fan 16.

The turbine engine can be a turbofan engine, such as a General Electric GEnx or CF6 series engine, commonly used in modern commercial and military aviation or it could be a variety of other known turbine engines such as a turboprop or turboshaft. The turbine engine can also have an afterburner that burns an additional amount of fuel downstream of the low pressure turbine region 24 to increase the velocity of the exhausted gases, and thereby increasing thrust.

The AGB 12 is coupled to the turbine engine 14 at either the high pressure or low pressure turbine region 22, 24 by way of a mechanical power take-off 26. The mechanical power take-off 26 contains multiple gears and means for mechanical coupling of the AGB 12 to the turbine engine 14. Under normal operating conditions, the power take-off 26 translates power from the turbine engine 14 to the AGB 12 to power accessories of the aircraft for example but not limited to fuel pumps, electrical systems, and cabin environment controls. The starter/generator 10 can be mounted on the outside of either the air intake region containing the fan 16 or on the core near the high pressure compression region 18.

The starter/generator 10 and the mechanical power take-off 26 can include generator housings 28 for any known power generator including by way of non-limiting example synchronous or asynchronous generators, permanent magnet generators, low pole count generators, etc.

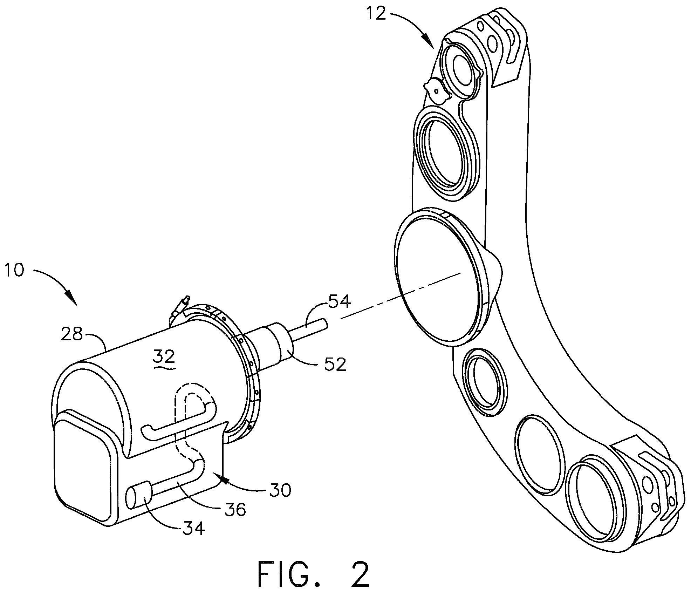

Referring now to FIG. 2, the starter/generator 10 and the AGB 12 are depicted in perspective view. The AGB 12 and the starter/generator 10 can be formed by any known materials and methods, including, but not limited to, die-casting of high strength and lightweight metals such as aluminum, stainless steel, iron, or titanium. The housings for the AGB 12 and starter/generator 10 can be formed with a thickness sufficient to provide adequate mechanical rigidity without adding unnecessary weight to AGB 12 and the electric generator 10 and, therefore, the aircraft.

The generator housing 28 can be manufactured using additive manufacturing (AM). AM is an appropriate name to describe the technologies that build 3D objects by adding layer-upon-layer of material, whether the material is plastic or metal. AM technologies utilize a computer, 3D modeling software (Computer Aided Design or CAD), machine equipment and layering material. Once a CAD sketch is produced, the AM equipment reads in data from the CAD file and lays downs or adds successive layers of liquid, powder, sheet material or other, in a layer-upon-layer fashion to fabricate a 3D object. It should be understood that the term AM encompasses many technologies including subsets like 3D Printing, Rapid Prototyping (RP), Direct Digital Manufacturing (DDM), layered manufacturing and additive fabrication.

While illustrated as an electric generator the starter/generator 10 can be any generator know in the art. The starter/generator 10 can operate as a generator to provide power for accessories attached to the AGB 12 for example but not limited to a fuel pump, oil pump, or a separate engine starter. It is also contemplated that the starter/generator 10 can operate as a motor supplying mechanical output where necessary, for example but not limited to supplying mechanical output torque sufficient to start the engine.

The starter/generator 10 can include an output shaft 52 and an input shaft 54 that can extend from within the output shaft 52 and is operably coupled to a portion of the AGB 12.

The generator housing 28 includes a fluid passage assembly 30 integral with the generator housing 28. As is illustrated, portions of the fluid passage assembly 30 can be located along an exterior 32 of the generator housing 28, while other portions (illustrated in dashed line) of the fluid passage assembly 30 can be located within the generator housing 28. The fluid passage assembly 30 includes an inlet conduit 34 for receiving fluids for lubrication or cooling. At least one distribution conduit 36, illustrated as a plurality of distribution conduits 36, is fluidly coupled to the inlet conduit 34.

FIG. 3 is a perspective view of a portion of an exemplary fluid passage assembly 30 for the generator housing 28 not forming part of the claimed invention. The generator housing 28 itself has been removed to illustrate multiple fluid passage flow routes 38. The inlet conduit 34 and at least one distribution conduit 36 are manufactured with a complicated flow route 38 to transfer fluids for lubrication and to transfer heat via coolant to maintain a functioning temperature in the generator housing 28. Coolant can first cool stationary parts then move to rotating parts such that the coolant cools a stator and rotor for the generator/starter 10. Furthermore, coolant can be utilized to lubricate bearings within the generator/startor. Traditionally the generator housing 28 is cast due to the intricate geometry of the conduits 34, 36 and the cross-section for the conduits is typically circular defining a diameter (D).

In producing the fluid passage assembly 30 utilizing AM technologies, support devices 40 can become necessary during manufacturing if the diameter (D) extends beyond 10 mm (0.4in), or an area greater than or equal to 80 millimeters squared (0.12 inches squared). When the diameter (D) meets or exceeds these parameters high stress/strain locations 42 which can range between 100 and 150 psi are produced along a surface perimeter 44 of the conduits 34, 36. When manufactured, the support devices 40 are printed along with the rest of the fluid passage assembly 30 and generator housing 28 to extend from the high stress/strain locations 42 and prevent collapse or deformation during the printing process. Due to small spaces and complicated branched design, not all of the support devices 40 can be removed when the fluid passage assembly 30 is complete. Support devices 40 can be any tab, pillar, stake, or otherwise small connecting structure between the conduits 34, 36 and the generator housing 28.

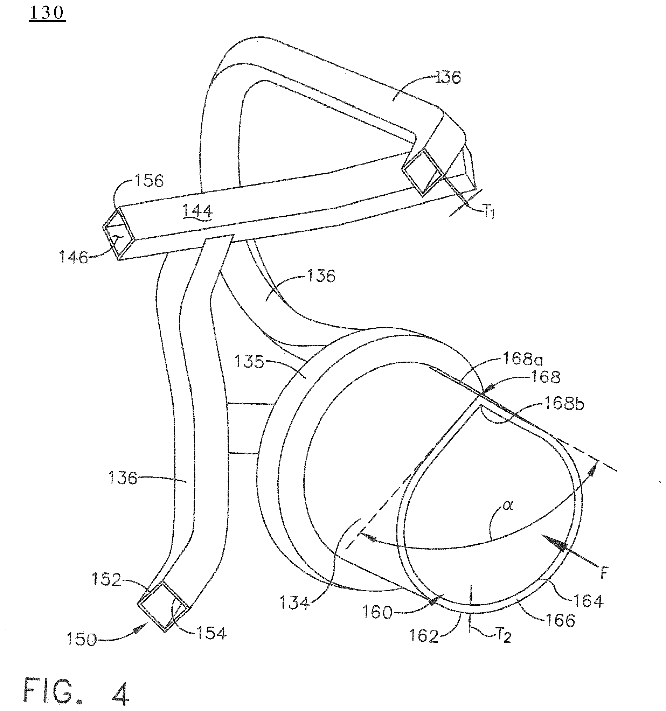

FIG. 4 is a perspective view of a portion of another fluid passage assembly 130 that can be utilized in the generator housing 28. The fluid passage assembly 130 includes an inlet conduit 134 for receiving fluid (F) for lubrication or cooling. It should be understood that while not shown, the generator housing 28 is structurally integral with portions of the fluid passage assembly 130 depending on location. At least one distribution conduit 136, illustrated as a plurality of distribution conduits, is fluidly coupled to the inlet conduit 134. A plenum 135 is provided between the inlet conduit 134 and the at least one distribution conduit 136 providing a fluid connection therebetween.

Oil is one possible fluid (F) received within the plenum 135 and passing through the inlet conduit 134 and the at least one distribution conduit 136. To ensure the required pressure drops within the conduits 134, 136, for an oil passage, the fluid passage assembly 130 can require conduits 134, 136 with diameters larger than 10 mm (0.4 in). However, as already described herein, conduits with parameters of diameters larger than 10 mm (0.4in) require support devices 40. To eliminate any support devices 40 while maintaining the required pressure for oil passage, a polygonal shaped cross-section 150 is contemplated. Elimination of support devices decreases total weight which increases specific fuel consumption. The polygonal shaped cross-section has better buckling resistance than the circular cross section, especially if the corners are oriented correctly relative to gravity.

The at least one distribution conduit 136 can define the polygonal shaped cross-section 150. By way of non-limiting example the polygonal shaped cross-section 150 can include a diamond exterior cross-section 152 defined by a surface perimeter 144 of the at least one distribution conduit 136 and a smaller diamond interior cross-section 154 along an interior 146 of the at least one distribution conduit 136. A wall 156 having a thickness T1 extends axially with respect to the at least one distribution conduit 136 from the surface perimeter 144 to the interior 146. The thickness T1 can range between 2 and 5 mm (0.1 to 0.2) inches. The thickness T1 can be any thickness optimized to handle pressure while maintaining mechanical integrity.

It is further contemplated that the inlet conduit 134 has an inlet cross-section 160 that can include a tear drop shaped exterior cross-section 162 and a smaller tear drop interior cross-section 164. The inlet cross-section 160 can be in the shape of a tear drop where a polygonal corner is added to a circular cross-section. A wall 166 having a thickness T2, can extend between the interior and exterior cross-sections 162, 164. The thickness T2 can range between 2 and 5 mm (0.1 to 0.2) inches. The thickness T2 can be any thickness optimized to handle pressure while maintaining mechanical integrity. The inlet cross-section 160 can define at least one corner, by way of non-limiting example an inlet corner 168 of both the tear drop exterior and interior cross-sections 162, 164. The inlet corner 168 extends through an angle α, having a maximum value of 45°. It is contemplated that the inlet corner 168 defines a sharp corner 168a along the exterior cross-section 162 and a radiused corner 168b along the interior cross-section 164.

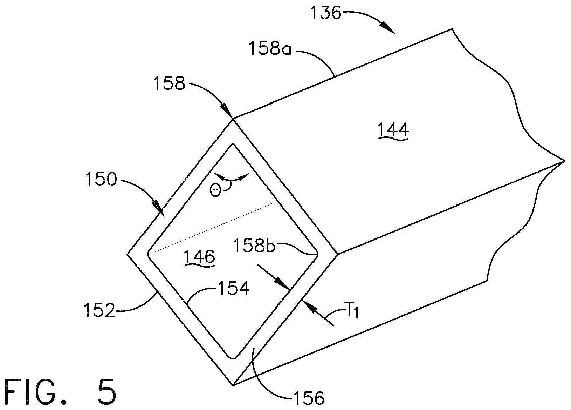

FIG. 5 is an enlarged view of the at least one distribution conduit 136. It can more clearly be seen that the polygonal shaped cross-section 150 defines at least one corner 158. As illustrated when having a diamond shape, the polygonal shaped cross-section 150 can define multiple corners 158, by way of non-limiting example four corners. The diamond exterior cross-section 152 can define a sharp corner 158a while the diamond interior cross-section 154 defines a radiused corner 158b. The at least one corner 158 extends through an angle Θ, having a value equal to or greater than of 45°. By way of non-limiting example the diamond shape can define a square as illustrated and the angle Θ is 90° in all four corners 158. To best enable passage of oil through the at least one distribution conduit 136 and prevent any clogging or blockage, the at least one corner 158 is a radiused corner 158b along the interior 146.

A method for manufacturing the fluid passage assembly 130 as described herein includes additively manufacturing the inlet conduit 134 having a first cross-section, by way of non-limiting example the inlet cross-section 160. The method further includes additively manufacturing at least one distribution conduit 136 fluidly coupled to the inlet conduit 134 and having a second cross-section, by way of non-limiting example the polygonal shaped cross-section 150 with the at least one corner 158. The method further includes printing the at least one distribution conduit 136 free from any support devices 40 (FIG. 3). Upon completion, the fluid passage assembly 130 is structurally sound due to the geometry of the conduits 134, 136 rather than any extra support devices.

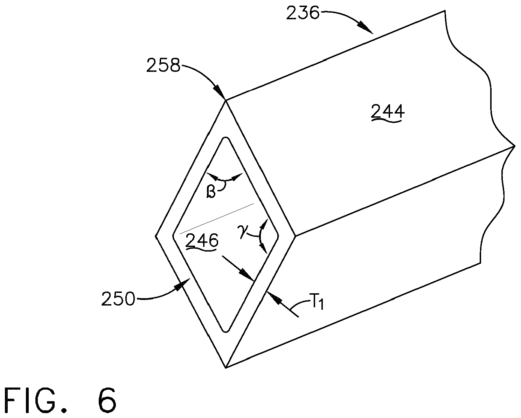

Turning to FIG. 6, another distribution conduit 236 is illustrated in which a polygonal shaped cross-section 250 defines four corners 258, two of which have angles β equal to 45° and two having angles γ equal to 135°. As already described herein, maintaining a corner angle of greater than or equal to 45° ensures proper pressure differentiation for an oil to flow through the distribution conduit 236.

Any polygonal cross-sectional shape is contemplated and the number of sides are shown for illustrative purposes only and not meant to be limiting. As was described earlier, the structural support provided by two sides forming an angle of greater than or equal to 45° provides the structural integrity previously provided by the removed supports.

The disclosure as described herein relates to a fluid passage assembly for a generator housing and the method for additively manufacturing the fluid passages of the fluid passage assembly by changing the cross sectional shape from a typical circular cross-section to a polygon, as described herein a diamond shape. Fluid channels with the polygon shape will enable additive manufacturing without internal supports during the additive manufacturing process for any size to meet the pressure drop requirement. Also internal supports are eliminated for any build orientation.

The elimination of internal supports can be implemented for any build orientation of a fluid passage assembly as described herein. Eliminating supports optimizes parts by decreasing the weight of the part which improves specific fuel consumption. Benefits further include utilizing additive manufacturing which is commercially efficient compared to other manufacturing processes in certain environments.

Many other possible embodiments and configurations in addition to that shown in the above figures are contemplated by the present disclosure. Additionally, the design and placement of the various components such as starter/generator, AGB, or components thereof can be rearranged such that a number of different in-line configurations could be realized.

This written description uses examples to disclose aspects of the invention, including the best mode, and also to enable any person skilled in the art to practice aspects of the invention, including making and using any devices or systems and performing any incorporated methods. The patentable scope of the invention is defined by the claims, and can include other examples that occur to those skilled in the art.

## Claims

1. A power generator (10) comprising:
a generator housing (28) for an aircraft; and
a fluid passage assembly (130) for the power generator (10), the fluid passage assembly (130) comprising:
an inlet conduit (134) for receiving a fluid;
a plenum (135) fluidly coupled to the inlet conduit (134); and
at least one distribution conduit (136) fluidly coupled to and extending from the plenum (135) for dispensing the fluid to the power generator (10);
wherein a cross-section (150, 152, 154) of the at least one distribution conduit (136) has at least one corner (158); wherein:
the cross-section (150, 152, 154) further comprises an interior cross-section (150, 152, 154) with radiused corners (158b); and
the fluid passage assembly (130) is a coolant fluid passage assembly (130) integral with the generator housing (28).

2. The power generator (10) of claim 1, wherein a surface perimeter (144) of the at least one distribution conduit (136) is free from any support devices (40).

3. The power generator (10) of any of claims 1-2, wherein the at least one corner (158, 168) extends through an angle greater than or equal to 45 degrees.

4. The power generator (10) of any of claims 1-3, wherein the at least one corner (158) is multiple corners (158) defining a polygonal shaped cross-section (150, 152, 154).

5. The power generator (10) of any of claims 1-4, wherein the cross-section (150, 152, 154) defines an area greater than or equal to 80 millimeters squared.

6. The power generator (10) of any of claims 1-5, wherein the inlet conduit (134) further comprises a cross-section (150, 152, 154) having at least one inlet corner (168).

7. The power generator (10) of claim 6, wherein the at least one inlet corner (168) defines an angle greater than or equal to 45 degrees.

8. The power generator (10) of claim 7, wherein the cross-section of the inlet conduit defines a tear drop shape.

## Patentansprüche

1. Leistungsgenerator (10), umfassend:
ein Generatorgehäuse (28) für ein Luftfahrzeug; und
eine Fluiddurchgangsanordnung (130) für den Leistungsgenerator (10), die Fluiddurchgangsanordnung (130) umfassend:
eine Einlassleitung (134) zum Aufnehmen eines Fluids;
ein Plenum (135), das mit der Einlassleitung (134) fluidisch gekoppelt ist; und
mindestens eine Verteilungsleitung (136), die mit dem Plenum (135) fluidisch gekoppelt ist und sich davon erstreckt, zum Abgeben des Fluids an den Leistungsgenerator (10);
wobei ein Querschnitt (150, 152, 154) der mindestens einen Verteilungsleitung (136) mindestens eine Ecke (158) aufweist; wobei:
der Querschnitt (150, 152, 154) ferner einen Innenquerschnitt (150, 152, 154) mit abgerundeten Ecken (158b) umfasst; und
die Fluiddurchgangsanordnung (130) eine Kühlmittelfluiddurchgangsanordnung (130) ist, die mit dem Generatorgehäuse (28) einstückig ist.

2. Leistungsgenerator (10) nach Anspruch 1, wobei ein Oberflächenumfang (144) der mindestens einen Verteilungsleitung (136) frei von beliebigen Stützvorrichtungen (40) ist.

3. Leistungsgenerator (10) nach einem der Ansprüche 1 bis 2, wobei sich die mindestens eine Ecke (158, 168) durch einen Winkel größer oder gleich 45 Grad erstreckt.

4. Leistungsgenerator (10) nach einem der Ansprüche 1 bis 3, wobei die mindestens eine Ecke (158) mehrere Ecken (158) ist, die einen polygonal geformten Querschnitt (150, 152, 154) definieren.

5. Leistungsgenerator (10) nach einem der Ansprüche 1 bis 4, wobei der Querschnitt (150, 152, 154) einen Bereich größer als oder gleich 80 Millimeter im Quadrat definiert.

6. Leistungsgenerator (10) nach einem der Ansprüche 1 bis 5, wobei die Einlassleitung (134) ferner einen Querschnitt (150, 152, 154) umfasst, der mindestens eine Einlassecke (168) aufweist.

7. Leistungsgenerator (10) nach Anspruch 6, wobei die mindestens eine Einlassecke (168) einen Winkel größer als oder gleich 45 Grad definiert.

8. Leistungsgenerator (10) nach Anspruch 7, wobei der Querschnitt der Einlassleitung eine Tropfenform definiert.

## Revendications

1. Générateur de puissance (10) comprenant :
un boîtier de générateur (28) pour un aéronef ; et
un ensemble de passage de fluide (130) pour le générateur de puissance (10), l'ensemble de passage de fluide (130) comprenant :
un conduit d'entrée (134) permettant de recevoir un fluide ;
un plénum (135) accouplé fluidiquement au conduit d'entrée (134) ; et
au moins un conduit de distribution (136) accouplé fluidiquement au plénum (135) et s'étendant à partir de celui-ci, permettant de distribuer le fluide au générateur de puissance (10) ;
dans lequel une section transversale (150, 152, 154) de l'au moins un conduit de distribution (136) a au moins un coin (158) ; dans lequel :
la section transversale (150, 152, 154) comprend en outre une section transversale (150, 152, 154) intérieure avec des coins arrondis (158b) ; et
l'ensemble de passage de fluide (130) est un ensemble de passage de fluide de refroidissement (130) solidaire du boîtier de générateur (28).

2. Générateur de puissance (10) selon la revendication 1, dans lequel un périmètre de surface (144) de l'au moins un conduit de distribution (136) est exempt de tout dispositif de support (40).

3. Générateur de puissance (10) selon l'une quelconque des revendications 1 à 2, dans lequel l'au moins un coin (158, 168) s'étend sur un angle supérieur ou égal à 45 degrés.

4. Générateur de puissance (10) selon l'une quelconque des revendications 1 à 3, dans lequel l'au moins un coin (158) est de multiples coins (158) définissant une section transversale (150, 152, 154) de forme polygonale.

5. Générateur de puissance (10) selon l'une quelconque des revendications 1 à 4, dans lequel la section transversale (150, 152, 154) définit une zone supérieure ou égale à 80 millimètres carrés.

6. Générateur de puissance (10) selon l'une quelconque des revendications 1 à 5, dans lequel le conduit d'entrée (134) comprend en outre une section transversale (150, 152, 154) ayant au moins un coin d'entrée (168).

7. Générateur de puissance (10) selon la revendication 6, dans lequel l'au moins un angle d'entrée (168) définit un angle supérieur ou égal à 45 degrés.

8. Générateur de puissance (10) selon la revendication 7, dans lequel la section transversale du conduit d'entrée définit une forme de goutte d'eau.
